# EUROPEAN PATENT SPECIFICATION

(11) **EP 4 000 351 B1**
(45) Date of publication and mention of the grant of the patent: **01.10.2025**
(21) Application number: 19941734.6
(22) Date of filing: 15.08.2019
(51) Int. Cl.: H05B 45/36, H05B 45/382, H05B 45/385, H02M 1/44

(54) **DRIVER MODULE AND LIGHTING SYSTEM SUITABLE FOR USE IN A HUMID ENVIRONMENT**
TREIBERMODUL UND BELEUCHTUNGSSYSTEM ZUR VERWENDUNG IN EINER FEUCHTEN UMGEBUNG
MODULE D'ATTAQUE ET SYSTÈME D'ÉCLAIRAGE APPROPRIÉ POUR UNE UTILISATION DANS UN ENVIRONNEMENT HUMIDE

(43) Date of publication of application: 25.05.2022
(73) Proprietor: Tridonic GmbH & Co KG, 6851 Dornbirn (AT)
(72) Inventor: MAO, Qiuxiang, Shenzhen, Guangdong 518131 (CN); CHEN, Zhiwen, Shenzhen, Guangdong 518131 (CN)
(74) Representative: Rupp, Christian
(86) International application number: PCT/CN2019/100766
(87) International publication number: WO 2021/026876

(56) References cited:
- EP-A1- 3 232 551
- WO-A1-2013/132379
- WO-A2-2012/028787
- CN-A- 102 163 852
- CN-A- 104 093 245

## Description

### TECHNICAL FIELD

The present disclosure generally relates to power supplies for driving light emitting diodes (LED) or other light emitting devices. In particular, the present disclosure is directed to an LED driver module and a lighting system having a LED driver module suitable for use in a humid environment.

### BACKGROUND

Switched mode power supplies are commonly used to provide a regulated load current to drive one or more light emitting devices, comprising one or more light emitting diodes (LEDs), an LED string, an LED array, or any combination thereof. Lighting devices that employ switched mode power supplies often configured to isolate the load from the input power, such as an alternating current (AC) main, and generate a conditioned direct current (DC) output voltage. A controller integrated circuit (IC) is typically used to monitor conditions of the output power and adjust the switching circuit accordingly to provide a regulated and substantially constant current to the output load. WO 2012/028787 A2 and EP3232551 A1 both disclose a driver module in accordance with a preamble of independent claim 1.

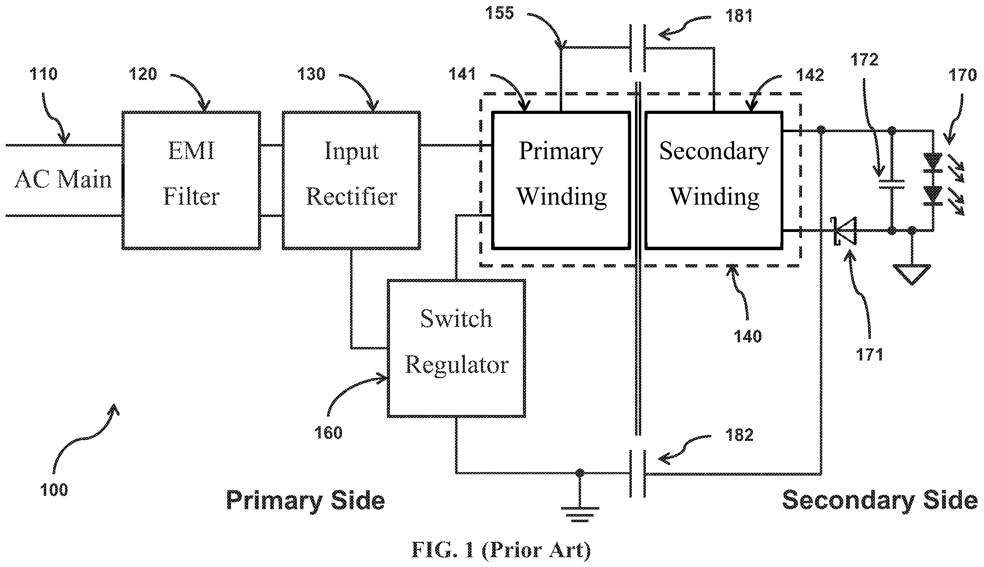

A simplified block diagram of a typical isolated switched mode power supply with Primary-Side-Regulation (PSR) used to power an LED string is shown in FIG. 1. The LED driver module 100 receives AC input power from an AC main **110.** The AC input power is received and coupled to an electromagnetic interference (EMI) filter **120** and an input rectifier **130.** The EMI filter **120** is configured to eliminate the disturbance that may affect the internal circuitry of the LED driver module **100.** The input rectifier **130** may be a full bridge rectifier arranged to convert the AC input power to DC power. The LED driver module **100** further comprises switching regulator **160** based on a flyback converter topology. The switching regulator **160** is configured to control the primary winding **141** of the flyback transformer **140,** such that current is induced in the secondary winding **142** of the flyback transformer **140,** which can isolate the LED string **170** from the AC main **110.** Not shown but typical part of the flyback converter is the output rectifier and secondary side smoothing circuit connected to the secondary winding **142** of the flyback transformer **140.**

As it is known that the transformer has some stray capacitance between the primary winding **141** and the secondary winding **142,** Y-capacitors **181, 182** with capacitance substantially higher than the stray capacitance of the flyback transformer **140** are needed to suppress the high-frequency EMI generated by the switching process. In certain instances, a first Y-capacitor **181** is placed to connect the power lines across the isolation boundary of the flyback transformer **140,** and a second Y-capacitor **182** is placed to connect the primary ground of the primary side to the power line of the secondary side across the isolation boundary of the flyback transformer **140.**

Taking the example of an LED driver module **100** using an isolated constant current LED driver IC, such as SD6800, the use of Y-capacitors **181, 182** can solve the high-frequency EMI issue, however there is reliability issue when the LED driver module **100** is used in a humid environment. Particularly, there is current leakage from traces and components in the primary side around the COMP pin of the LED driver IC as caused by the node **155** of the Y-capacitor **181** with a substantially higher voltage rating.

Other alternative methods, such as shielding the COMP pin or isolating the high power path, are considered. However, in view of the limitation in the space of the printed circuit board (PCB) for fitting into the casing, the possibility of such changes on the layout design is not practical. Therefore, there is a need in the art to have an LED driver module suitable for use in a humid environment.

### SUMMARY

Provided herein is a driver module according to claim 1.

According to certain aspects, the driver module comprises a second Y-capacitor connecting the primary ground to the secondary circuit.

According to certain aspects, the voltage divider comprises a capacitor and a resistor, wherein the capacitor has a capacitance substantially greater than the first Y-capacitor's capacitance, and the resistor pulls the node of the first Y-capacitor on the primary circuit to the primary ground. The capacitance of the capacitor is at least 5 times greater than the first Y-capacitor's capacitance.

According to certain aspects, the voltage divider comprises a capacitor and an inductor, wherein the capacitor has a capacitance substantially greater than the first Y-capacitor's capacitance, and the inductor pulls the node of the first Y-capacitor on the primary circuit to the primary ground. The capacitance of the capacitor is at least 5 times greater than the first Y-capacitor's capacitance.

According to certain aspects, the primary circuit comprises an EMI filter and an input rectifier.

According to certain aspects, the one or more light emitting devices comprise one or more light emitting diodes (LEDs), an LED string, an LED array, or any combination thereof.

According to certain aspects, the switching regulator is configured in accordance with a flyback converter topology with a PSR.

According to certain aspects not forming part of the present disclosure, the controller IC is SD6800.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. Other aspects and advantages of the present invention are disclosed as illustrated by the embodiments hereinafter.

### BRIEF DESCRIPTION OF THE DRAWINGS

The appended drawings, where like reference numerals refer to identical or functionally similar elements, contain figures of certain embodiments to further illustrate and clarify various aspects, advantages and features of the LED driver module and system as disclosed herein. It will be appreciated that these drawings and graphs depict only certain embodiments of the invention and are not intended to limit its scope. The LED driver module and system as disclosed herein will be described and explained with additional specificity and detail through the use of the accompanying drawings in which:
FIG. **1** depicts a simplified block diagram of a conventional switched mode power supply with PSR for powering an LED string.
FIG. **2** depicts a simplified block diagram of a switched mode power supply with PSR for powering an LED string in accordance with an exemplary embodiment of the present disclosure.
FIG. **3** depicts a circuit diagram of the EMI filter and the input rectifier in accordance with an exemplary embodiment of the present disclosure.
FIG. **4** depicts a circuit diagram of the primary circuit between the input rectifier and the transformer in accordance with an exemplary embodiment of the present disclosure.
FIG. **5A** depicts a circuit diagram of the switching regulator in accordance with an exemplary embodiment of the present disclosure.
FIG. **5B** depicts a block diagram of an exemplary controller IC, SD6800.
FIG. **6** depicts a circuit diagram of the secondary circuit in accordance with an exemplary embodiment of the present disclosure.
FIG. 7 is a photo of the bottom side PCB of a conventional LED driver module.
FIG. **8A** depicts a circuit diagram of an EMI suppression path in accordance with an exemplary embodiment of the present disclosure.
FIG. **8B** depicts a circuit diagram of another EMI suppression path in accordance with an exemplary embodiment of the present disclosure.

Skilled artisans will appreciate that elements in the figures are illustrated for simplicity and clarity and have not necessarily been depicted to scale.

### DETAILED DESCRIPTION

The present disclosure generally relates to a power supply for driving LED or other light emitting devices. More specifically, but without limitation, the present disclosure relates to an LED driver module suitable for use in a humid environment. An objective of the present disclosure is to prevent current leakage to the IC pins with a low voltage potential by reducing the voltage potential of the Y-capacitors in the primary side.

In the following embodiments, the driver module and the lighting system are merely exemplary in nature and are not intended to limit the disclosure or its application and/or uses. It should be appreciated that a vast number of variations exist. The detailed description will enable those of ordinary skill in the art to implement an exemplary embodiment of the present disclosure without undue experimentation, and it is understood that various changes or modifications may be made in the function and arrangement of the circuit described in the exemplary embodiment without departing from the scope of the present disclosure as set forth in the appended claims.

The benefits, advantages, solutions to problems, and any element(s) that may cause any benefit, advantage, or solution to occur or become more pronounced are not to be construed as a critical, required, or essential features or elements of any or all of the claims. The invention is defined solely by the appended claims including any amendments made during the pendency of this application and all equivalents of those claims as issued.

For simplicity and clarity, relational terms such as "first," "second," and the like, if any, are used solely to distinguish one from another entry, item, or device, without necessarily requiring any actual such relationship or order between such entries, items, or devices. The terms "coupled" and "connected," along with any variant thereof, are used to cover any coupling or connection, either direct or indirect, between two or more elements unless otherwise indicated or clearly contradicted by context. The term "substantially" as applied to a comparative term such as "greater than," "higher than," and "lower than" means a deviation by more than 5 times, more preferably a deviation by more than 10 times, and most preferably a deviation by more than 20 times.

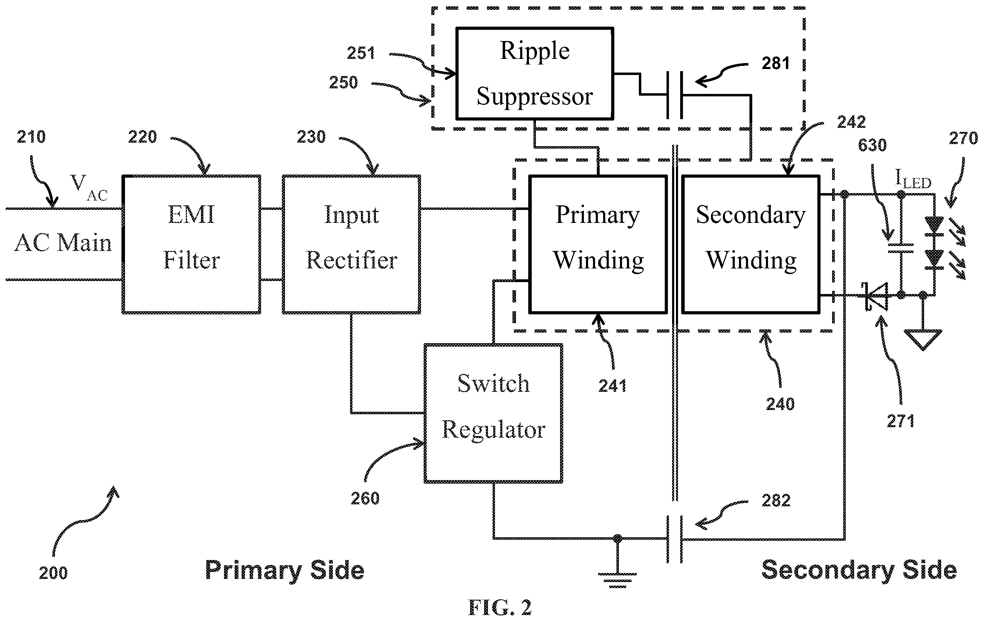

A simplified block diagram of a switched mode power supply with PSR used to power an LED string is shown in FIG. **2****.** A driver module **200,** comprising a transformer with a primary circuit on the primary side and a secondary circuit on the secondary side, receives AC input power with an input voltage V_{AC} from an AC main **210** and drive one or more light emitting devices **270.** The AC input power may be a 120V/60Hz power, a 220V/50Hz power, or from other suitable AC power sources. The light emitting device **270** used for the present disclosure can be any device configured to generate light. In some cases, the light emitting device **270** is a solid-state device that converts electrical energy to light, comprise one or more LEDs, an LED string, an LED array, or any combination thereof. In other cases, the light emitting device **270** can be a gas discharge lamp, an incandescent lamp, a lighting panel, a low-voltage halogen lamp, or the like, or any combinations thereof. In order to drive the one or more light emitting devices **270,** a driving current (I_{LED}) is supplied thereto for controlling the luminance. The PSR circuit regulates the output current and the applied voltage on the load through the control in the primary side.

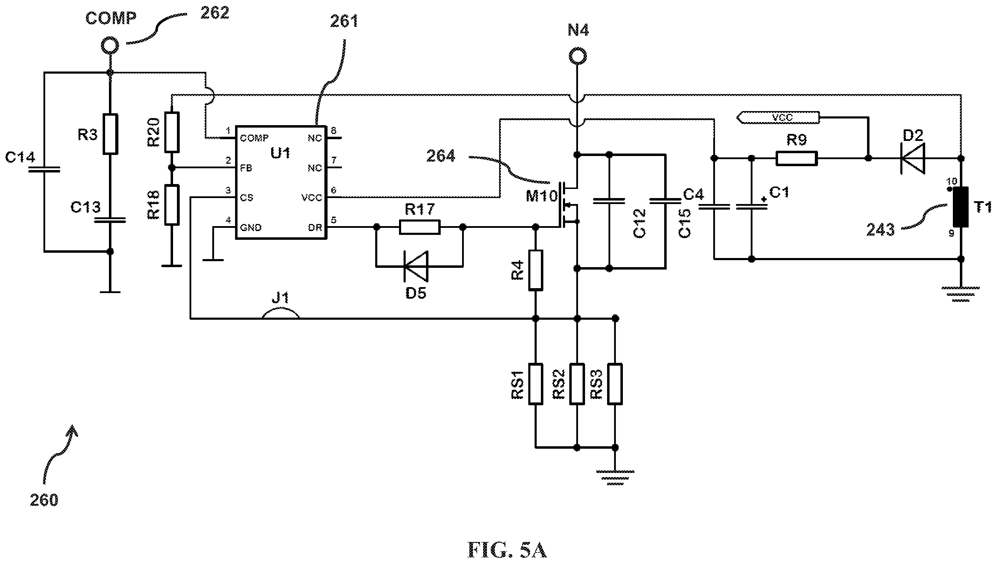

The AC input power is received and preferably coupled to an EMI filter **220** and an input rectifier **230.** It is common to have electromagnetic interference in the power lines, and the EMI filter **220** may be installed directly at the entry point of the AC input power. The EMI filter **220** may be a common mode choke for eliminating the disturbance and suppressing the noise that may affect the internal circuitry of the driver module **200.** The input rectifier **230** may be a full bridge rectifier having four diodes arranged to convert the AC input power to DC power. The primary circuit of the driver module **200** further comprises switching regulator **260** used to control a flyback converter, which may include one or more switching devices, a controller IC **261** (shown in FIG. **5A****),** and control circuitry for regulating the voltage. The transformer **240** comprises a primary winding **241** on the primary side and a secondary winding **242** on the secondary side. The transformer **240** is used to step up or step down the input voltage V_{AC} and to isolate the AC main **210** from the secondary circuit. The switching regulator **260** is configured to control the primary winding **241** of the transformer **240,** such that current is induced in the secondary winding **242** of the transformer **240.**

Given that the transformer **240** can have some stray capacitance between the primary winding **241** and the secondary winding **242,** Y-capacitors **281, 282** with capacitance substantially higher than the stray capacitance of the transformer **240** are needed to suppress the high-frequency EMI generated by the switching process. According to certain embodiments of the present disclosure, an EMI suppression path **250** comprising a voltage divider **251** and a first Y-capacitor **281** connected in series is used to connect the primary circuit to the secondary circuit across the isolation boundary of the transformer **240,** and a second Y-capacitor **282** is placed to connect the primary ground of the primary side to the power line of the secondary circuit across the isolation boundary of the transformer **240.**

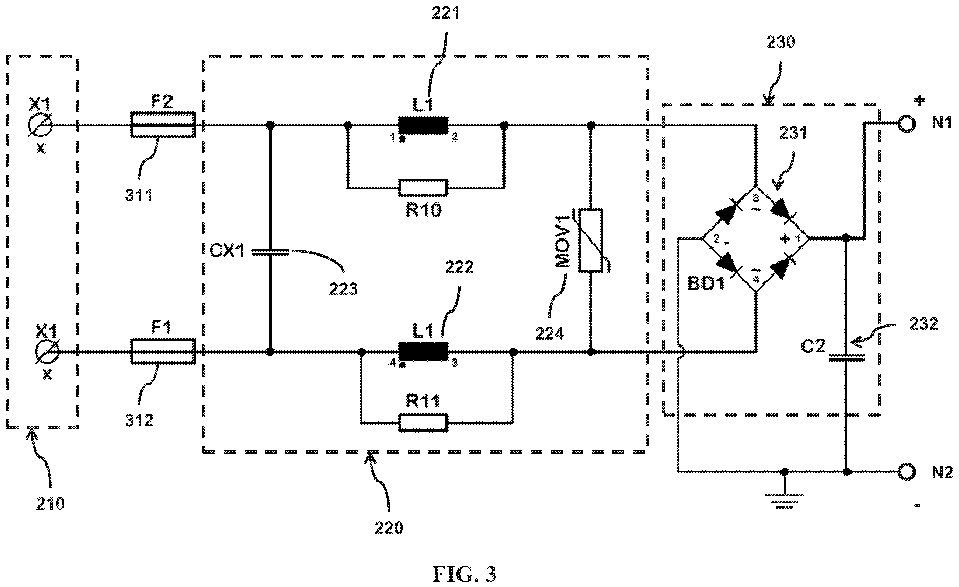

In FIG. **3****,** the circuit diagram of the EMI filter **220** and the input rectifier **230** are shown as an exemplary implementation of the respective blocks in FIG. **2****.** The input voltage V_{AC} is provided at the two input nodes X1 as the AC main **210.** The input nodes are connected to two fuses **311, 312** for input protection. The EMI filter **220** may comprise an input filter capacitor **223,** common mode choke configured to reduce line conducted EMI including the first inductor **221** and the second inductor **222** wound around the same core, and a metal oxide varistor (MOV) **224.** The MOV **224** is a voltage suppression device that clamps a transient in the circuit. In certain embodiments, the MOV **224** is referred to as a Varistor, variable resistor, or a voltage-dependent device which has an electrical behavior similar to back to back Zener diodes. Any potentially destructive energy of the incoming transient pulse from the AC main **210 is** absorbed by the MOV **224,** thereby protecting the vulnerable internal circuit components. Although the EMI filter **220** as illustrated in FIGS. **2** and **3** is positioned between the AC main **210** and the input rectifier **230,** the filtering components of the EMI filter **220** may be positioned between the input rectifier **230** and the transformer **240.** The input rectifier **230** may be a full bridge rectifier **231** having four diodes arranged in a closed loop configuration to convert the AC input power to DC power. A smoothing capacitor **232** connected in parallel to the output of the full bridge rectifier **231** converts the full-wave rippled output of the full bridge rectifier **231** into a relatively smooth rectified DC voltage, which is obtainable at node N1 and node N2.

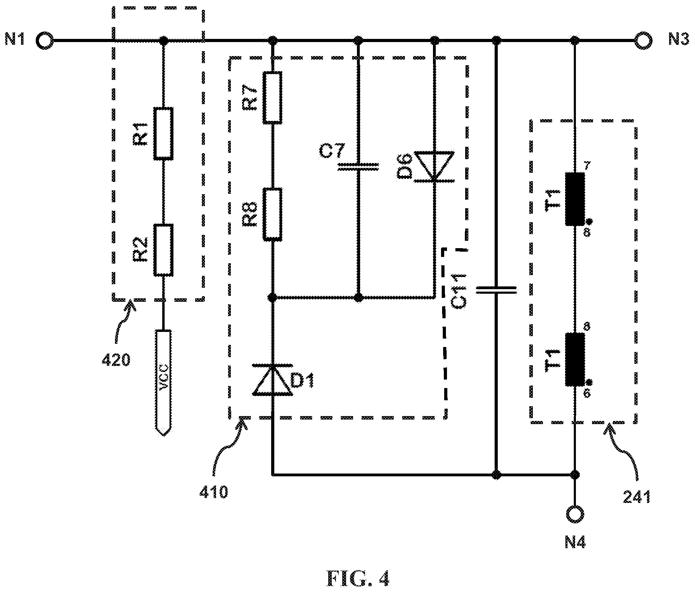

Now referring to FIG. **4****,** illustrated is a circuit diagram of the primary circuit between the input rectifier **230** and the transformer **240.** Node N1 is the rectified DC voltage. Startup resistor **420** is used to provide a startup VCC for the controller IC **261** (not shown in FIG. **4**) to initiate. The resistance of the startup resistor **420** can be selected to generate a VCC that is sufficient to power up the controller IC **261** and switching transistor **264.** A resistor-capacitor-diode (RCD) snubber **410** is used to clamp the voltage spikes and modify the spike frequency. The resistors used in the present disclosure may be a thin film resistor, a surface mounted chip resistor, or other types of resistor. Transient voltage suppression (TVS) diode or an equivalent configuration of diodes may be used to protect the internal circuit from voltage spikes. On the primary side, there is provided the primary winding **241** of the transformer **240,** which has an isolation boundary for isolating the secondary circuit from the primary circuit. The RCD snubber **410** and the primary winding **241** are connected to a node N4, which is further connected to the switching device in the switching regulator **260.**

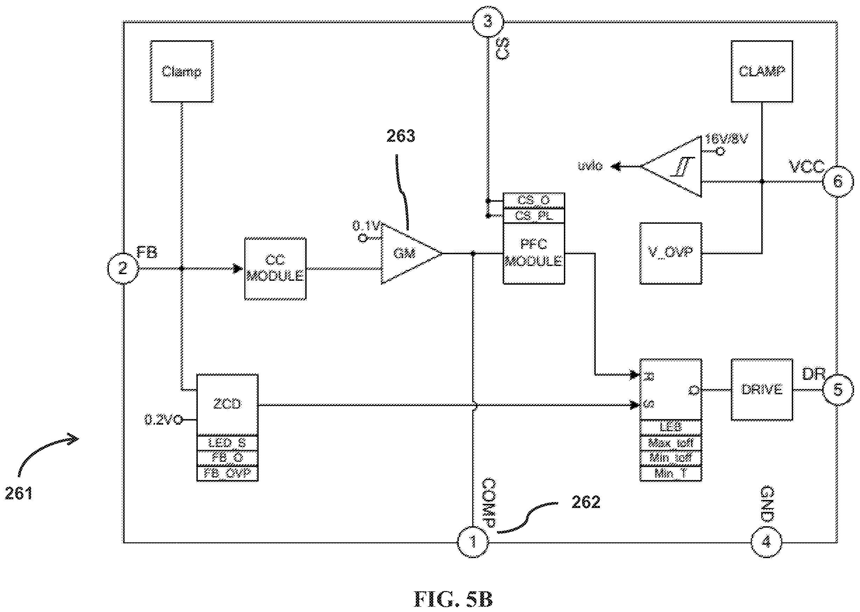

A circuit diagram of the switching regulator **260** is depicted in FIG. **5A****.** The VCC for powering the controller IC **261** is provided from the auxiliary winding **243.** In certain embodiments, the controller IC **261** is SD6800, and the block diagram of the SD6800 is shown in FIG. **5B****.** Startup VCC is provided by the startup resistor **420** for initially powering up the controller IC **261** until the controller IC **261** initiates the gate drive to the switching transistor **264,** such as metal oxide semiconductor field effect transistor (MOSFET), bipolar junction transistor (BJT) or other switching devices. The switching regulator **260** is configured in accordance with a flyback converter topology with a PSR. The controller IC **261** operating in a PSR has a COMP pin **262,** which is an RC loop compensation pin connecting to the output of the transconductance amplifier **263** inside the controller IC **261.** The COMP pin **262** is sensitive to the switch on time of the switching transistor **264.** The voltage rating of the COMP pin **262** is substantially lower than the power line of the rectified DC voltage.

The switching transistor **264** is drain coupled to the primary winding **241** of the transformer **240.** The gate is controlled by the drive (DR) pin of the controller IC **261.** The transformer **240** operates in a discontinuous conduction mode. When the switching transistor **264** is switched off (DR=0), the current in the primary winding **241** collapses. The switching transistor **264** is controlled to provide power conversion, such that the current from the AC main **210** is regulated through the transformer **240** and induced to the secondary winding **242** with a driving current (I_{LED}) that can be accurately controlled for controlling the luminance of the light emitting devices **270.**

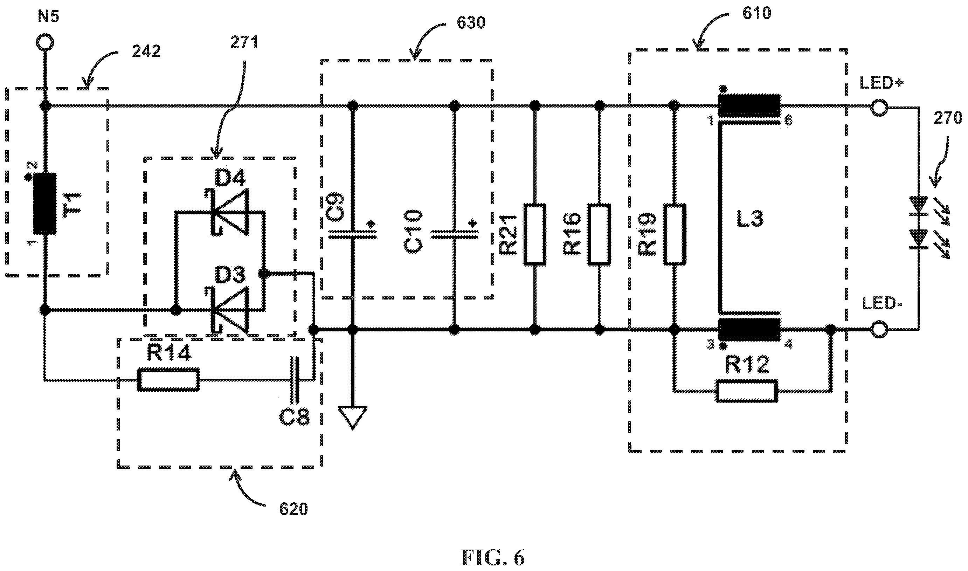

Now referring to FIG. **6****,** the circuit diagram of the secondary circuit is depicted. The secondary circuit is isolated from the primary circuit by the transformer **240** and connected to the secondary winding **242.** The driving current (I_{LED}) induced to the secondary winding **242** is coupled to and drives the one or more light emitting devices **270.** The secondary circuit may also comprise an output EMI choke **610** for compliance with the EMI standards, and an output rectifier D3 and D4 as well as a RC snubber **620** for clamping any voltage spikes, and at least one secondary side smoothing capacitor C9 or C10.

As provided in FIG. **1****,** conventional LED driver module **100** has Y-capacitors **181, 182** positioned across the isolation boundary of the flyback transformer **140.** A Y-capacitor used for the present disclosure is a capacitor with sufficient voltage rating to safely span the isolation boundary between the primary side and the secondary side of the LED driver module **100.** The Y-capacitor can provide an EMI suppression path between the primary side and the secondary side, thereby suppressing the high-frequency EMI.

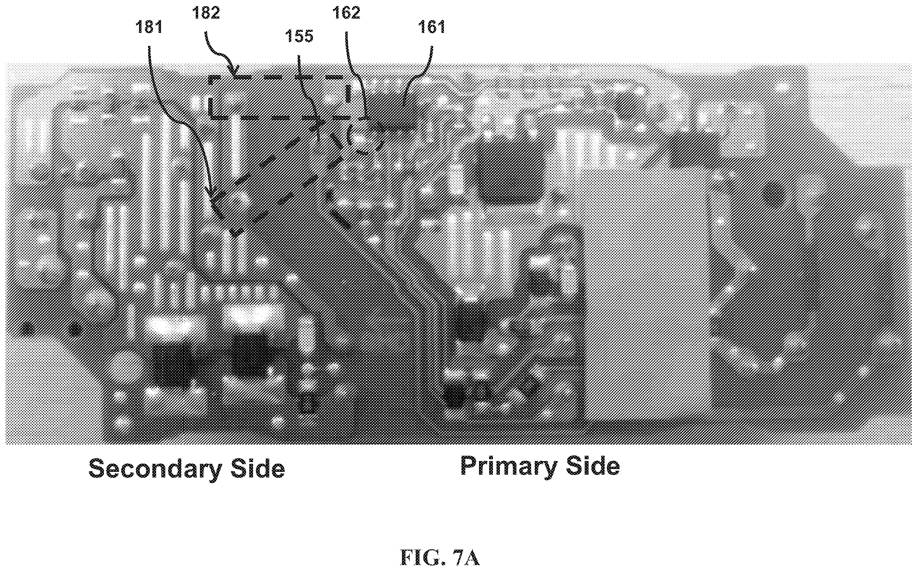

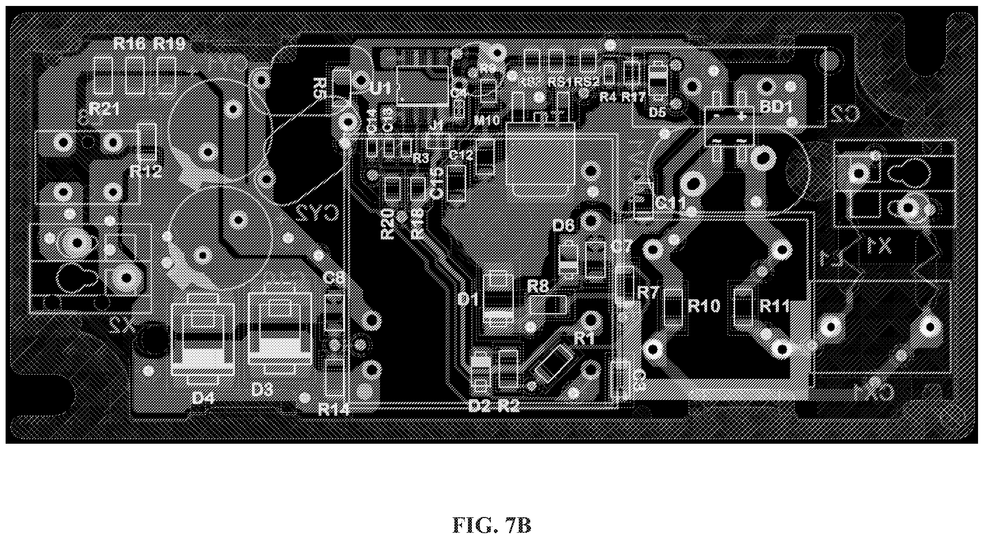

FIG. 7 shows a photo of the bottom side of a PCB of a conventional LED driver module **100.** In view of the limitations in the space of the PCB for fitting the LED driver module **100** into the casing, the two Y-capacitors **181, 182** are placed at positions surrounded by parts and traces with lower voltage ratings. In particular, the node **155** of the first Y-capacitor **181** on the primary side is a high voltage node with a substantially higher voltage rating. The nearby COMP pin **162** of the controller IC **161** is unavoidably proximate to the node **155** physically on the PCB. In a humid environment, COMP pin **162** is very sensitive to humidity and is senstive to interfering leakage current from surrounding parts or traces. Therefore, the LED driver modules **100** in the 30-45W LED lighting systems generally available in the market have similar reliability issues when used in a humid environment.

Accordingly, the present disclosure provides a driver module **200** suitable for use in a humid environment, by preventing current leakage to the COMP pin **262** of the controller IC **261.** Advantageously, the driver module **200** comprises an EMI suppression path **250** with a voltage divider **251** for reducing the voltage potential of the first Y-capacitor **281** in the primary side.

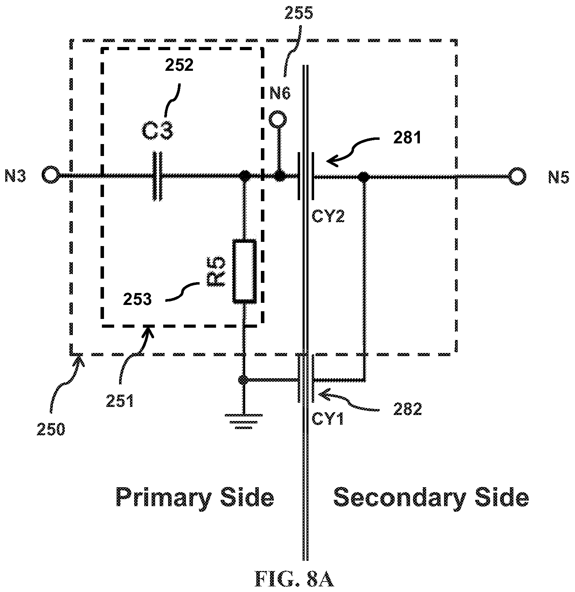

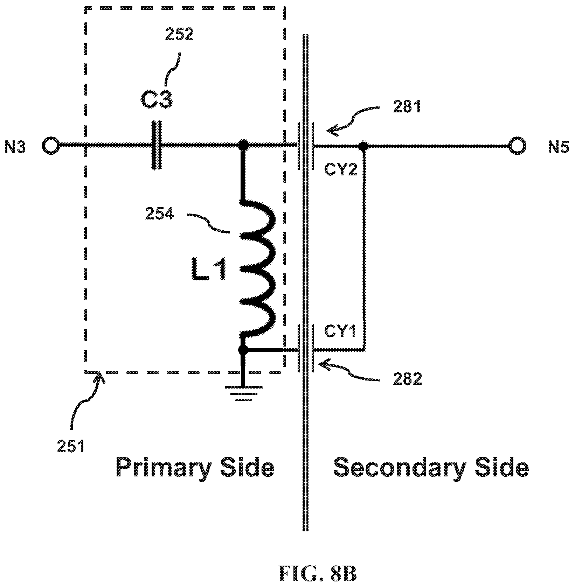

FIG. **8A** and FIG. **8B** show two circuit diagrams of the EMI suppression path **250** in accordance with the embodiments of the present disclosure. An EMI suppression path **250,** comprising a voltage divider **251** and a first Y-capacitor **281** connected in series, connects the primary circuit to the secondary circuit at the boundary of the transformer **240.** The voltage divider **251** is configured to pull a node N6 **255** of the first Y-capacitor **281** on the primary circuit to the primary ground, such that a high voltage node proximate to the controller IC **261** is not present, thereby avoiding any current leakage in a humid environment. The second Y-capacitor **282** preferably connects the primary ground to the positive node N5 of the secondary circuit.

As shown in FIG. **8A****,** the first implementation of the voltage divider **251** comprises a capacitor C3 **252** and a resistor R5 **253.** In the second implementation in FIG. **8B****,** the voltage divider **251** comprises a capacitor C3 **252** and an inductor L1 **254.** The capacitor C3 **252** has a capacitance substantially greater than the capacitance of the first Y-capacitor **281.** The resistance of the resistor R5 **253** is preferably about 1k ohm to minimize the energy consumption. The capacitance of the capacitor C3 **252** is at least 5 times greater than the capacitance of the first Y-capacitor **281,** and more preferably the capacitance of the capacitor C3 252 is 10 times greater than the capacitance of the first Y-capacitor **281.**

The purpose of having either the resistor R5 **253** or the inductor L1 **254** is to pull the node N6 **255** of the first Y-capacitor **281** on the primary circuit to primary ground (zero voltage). In the EMI suppression path **250,** the capacitor C3 **252** is in series with the first Y-capacitor **281,** but with a substantially greater capacitance. During normal operation, the voltage of the node N6 **255** is pulled down to the primary ground by the resistor R5 **253** or the inductor L1 **254.** As the EMI signal is a high-frequency signal, which transmits alone the low impedance path. The undesirable EMI can pass through the first Y-capacitor **281** and the capacitor C3 **252.** By performing the dielectric strength (HI-POT) test, a high potential AC signal of 3.8kV_{AC} is used. The measured voltage at node N6 **255** is only 345V_{AC}, which is only 9% of the testing voltage.

Thus, with the described example embodiments, the driver module **200** and the lighting system having the LED driver module **200** and one or more light emitting devices **270** can advantageously eliminate a high voltage node proximate to the controller IC **261,** thereby avoiding any current leakage in a humid environment. The driver module **200** can be produced with a lower standard PCB, such as FR1, for cost reduction while the reliability is not significantly compromised.

It is easily understood by those skilled in the art that power supplies using other isolated topologies, such as DC to DC converter, half-bridge resonant converter, forward converter, flyback converter with secondary side regulation (SSR), and other transformer-based power converters, can also implement the EMI suppression path with a voltage divider to achieve the same advantages without departing from the purpose and the scope of the present disclosure.

The present embodiment is to be considered in all respects as illustrative and not restrictive. The scope of the disclosure is indicated by the appended claims rather than by the preceding description, and all changes that come within the meaning and range of equivalency of the claims are therefore intended to be embraced therein.

## Claims

1. A driver module (200) for driving one or more light emitting devices (270), the driver module (200) comprising:
a transformer (240) including a primary winding (241) and a secondary winding (242);
a primary circuit comprising a switching regulator (260) having a switching transistor (264) coupled to the primary winding (241) and a controller integrated circuit ,IC, (261);
a secondary circuit being isolated from the primary circuit by the transformer (240), adapted to be connected to the one or more light emitting devices (270) and connected to the secondary winding (242) such that a driving current (I_{LED}) induced on the secondary winding (242) is adapted to drive the one or more light emitting devices (270); and
an electromagnetic interference ,EMI, suppression path connecting the primary circuit to the secondary circuit, the EMI suppression path comprising a first Y-capacitor (281);
**characterized in that**:
the EMI suppression path further comprising a voltage divider (251) connected in series to the first Y-capacitor (281); and
the voltage divider (251) is configured to pull a node (255) of the first Y-capacitor (281) on the primary circuit to a primary ground, such that a high voltage node proximate to the controller IC (261) is not present, thereby avoiding any current leakage in a humid environment, wherein the voltage divider (251) comprises a capacitor (252) and a resistor (253), wherein the capacitor (252) has a capacitance substantially greater than the first capacitor (281)'s capacitance; and the resistor (253) pulls the node (255) of the first Y-capacitor (281) on the primary circuit to the primary ground,
or
wherein the voltage divider (251) comprises a capacitor (252) and an inductor (254), wherein the capacitor (252) has a capacitance substantially greater than the first Y-capacitor (281)'s capacitance; and the inductor (254) pulls the node (255) of the first Y-capacitor (281) on the primary circuit to the primary ground.

2. The driver module (200) of claim 1, further comprising a second Y-capacitor (282) connecting the primary ground to the secondary circuit.

3. The driver module (200) of claim 1, wherein the capacitance of the capacitor (252) is at least 5 times greater than the first Y-capacitor's (281) capacitance.

4. The driver module (200) of claim 1, wherein the primary circuit comprises an EMI filter (220) and an input rectifier (230).

5. The driver module (200) of claim 1, wherein the switching regulator (260) is configured in accordance with a flyback converter topology with a Primary-Side-Regulation (PSR).

6. A lighting system for driving one or more light emitting devices (270), the lighting system comprising the one or more light emitting devices (270) and the driver module (200) of any of the preceding claims.

7. The lighting system of claim 6, wherein the one or more light emitting devices (270) comprise one or more light emitting diodes (LEDs), an LED string, an LED array, or any combination thereof.

## Patentansprüche

1. Treibermodul (200) zum Antreiben einer oder mehrerer lichtemittierender Vorrichtungen (270), das Treibermodul (200) umfassend:
einen Transformator (240) einschließlich einer Primärwicklung (241) und einer Sekundärwicklung (242);
einen Primärkreis, umfassend einen Schaltregler (260), der einen Schalttransistor (264), der mit der Primärwicklung (241) gekoppelt ist, aufweist, und einen integrierten Steuerungskreis, Steuerungs-IC, (261);
einen Sekundärkreis, der durch den Transformator (240) von dem Primärkreis isoliert ist, der angepasst ist, um mit der einen oder den mehreren lichtemittierenden Vorrichtungen (270) verbunden zu werden, und der mit der Sekundärwicklung (242) verbunden ist, sodass ein Antriebsstrom (I_{LED}), der in der Sekundärwicklung (242) induziert wird, angepasst ist, um die eine oder die mehreren lichtemittierenden Vorrichtungen (270) anzutreiben; und
einen Unterdrückungspfad für elektromagnetische Interferenz, EMI, der den Primärkreis mit dem Sekundärkreis verbindet, der EMI-Unterdrückungspfad umfassend einen ersten Y-Kondensator (281);
**dadurch gekennzeichnet, dass:**
der EMI-Unterdrückungspfad ferner einen Spannungsteiler (251), der mit dem ersten Y-Kondensator (281) in Reihe verbunden ist, umfasst; und
der Spannungsteiler (251) konfiguriert ist, um einen Knoten (255) des ersten Y-Kondensators (281) in dem Primärkreis auf eine Primärmasse zu ziehen, sodass nahe des Steuerungs-IC (261) kein Hochspannungsknoten vorhanden ist, wobei dadurch jeglicher Stromverlust in einer feuchten Umgebung vermieden wird,
wobei der Spannungsteiler (251) einen Kondensator (252) und einen Widerstand (253) umfasst, wobei der Kondensator (252) eine Kapazität, die wesentlich größer als die Kapazität des ersten Y-Kondensators (281) ist, aufweist; und der Widerstand (253) den Knoten (255) des ersten Y-Kondensators (281) in dem Primärkreis auf die Primärmasse zieht oder
wobei der Spannungsteiler (251) einen Kondensator (252) und eine Induktivität (254) umfasst, wobei der Kondensator (252) eine Kapazität, die wesentlich größer als die Kapazität des ersten Y-Kondensators (281) ist, aufweist; und die Induktivität (254) den Knoten (255) des ersten Y-Kondensators (281) in dem Primärkreis auf die Primärmasse zieht.

2. Treibermodul (200) nach Anspruch 1, ferner umfassend einen zweiten Y-Kondensator (282), der die Primärmasse mit dem Sekundärkreis verbindet.

3. Treibermodul (200) nach Anspruch 1, wobei die Kapazität des Kondensators (252) mindestens 5-mal größer als die Kapazität des ersten Y-Kondensators (281) ist.

4. Treibermodul (200) nach Anspruch 1, wobei der Primärkreis einen EMI-Filter (220) und einen Eingangsgleichrichter (230) umfasst.

5. Treibermodul (200) nach Anspruch 1, wobei der Schaltregler (260) gemäß einer Sperrwandlertopologie mit einer Primärseitenregelung (PSR) konfiguriert ist.

6. Beleuchtungssystem zum Antreiben einer oder mehrerer lichtemittierender Vorrichtungen (270), das Beleuchtungssystem umfassend die eine oder die mehreren lichtemittierenden Vorrichtungen (270) und das Treibermodul (200) nach einem der vorstehenden Ansprüche.

7. Beleuchtungssystem nach Anspruch 6, wobei die eine oder die mehreren lichtemittierenden Vorrichtungen (270) eine oder mehrere lichtemittierenden Dioden (LEDs), eine LED-Kette, ein LED-Array oder eine beliebige Kombination davon umfassen.

## Revendications

1. Module de pilotage (200) pour piloter un ou plusieurs dispositifs émetteurs de lumière (270), le module de pilotage (200) comprenant :
un transformateur (240) comportant un enroulement primaire (241) et un enroulement secondaire (242) ;
un circuit primaire comprenant un régulateur de commutation (260) présentant un transistor de commutation (264) couplé à l'enroulement primaire (241) et un circuit intégré, IC, de commande (261) ;
un circuit secondaire isolé du circuit primaire par le transformateur (240), adapté pour être connecté au ou aux dispositifs émetteurs de lumière (270) et connecté à l'enroulement secondaire (242) de telle sorte qu'un courant de pilotage (I_{LED}) induit sur l'enroulement secondaire (242) est adapté pour piloter le ou les dispositifs émetteurs de lumière (270) ; et
un trajet de suppression des interférences électromagnétiques (EMI) connectant le circuit primaire au circuit secondaire, le trajet de suppression des EMI comprenant un premier condensateur en Y (281) ;
**caractérisé en ce que** :
le trajet de suppression EMI comprenant en outre un diviseur de tension (251) connecté en série au premier condensateur en Y (281) ; et
le diviseur de tension (251) est configuré pour tirer un nœud (255) du premier condensateur en Y (281) sur le circuit primaire vers une masse primaire, de telle sorte qu'un nœud de haute tension proche de l'IC de commande (261) n'est pas présent, évitant ainsi toute fuite de courant dans un environnement humide,
dans lequel le diviseur de tension (251) comprend un condensateur (252) et une résistance (253), dans lequel le condensateur (252) présente une capacité sensiblement supérieure à la capacité du premier condensateur en Y (281) ; et la résistance (253) tire le nœud (255) du premier condensateur en Y (281) sur le circuit primaire vers la masse primaire, ou
dans lequel le diviseur de tension (251) comprend un condensateur (252) et un inducteur (254), dans lequel le condensateur (252) présente une capacité sensiblement supérieure à la capacité du premier condensateur en Y (281) ; et l'inducteur (254) tire le nœud (255) du premier condensateur en Y (281) sur le circuit primaire vers la masse primaire.

2. Module de pilotage (200) selon la revendication 1 comprenant en outre un second condensateur en Y (282) connectant la masse primaire au circuit secondaire.

3. Module de pilotage (200) selon la revendication 1, dans lequel la capacité du condensateur (252) est au moins 5 fois supérieure à la capacité du premier condensateur en Y (281).

4. Module de pilotage (200) selon la revendication 1, dans lequel le circuit primaire comprend un filtre EMI (220) et un redresseur d'entrée (230).

5. Module de pilotage (200) selon la revendication 1, dans lequel le régulateur de commutation (260) est configuré conformément à une topologie de convertisseur flyback avec une régulation côté primaire (PSR).

6. Système d'éclairage pour piloter un ou plusieurs dispositifs émetteurs de lumière (270), le système d'éclairage comprenant le ou les dispositifs émetteurs de lumière (270) et le module de pilotage (200) selon l'une des revendications précédentes.

7. Système d'éclairage selon la revendication 6, dans lequel le ou les dispositifs émetteurs de lumière (270) comprend/comprennent une ou plusieurs diodes électroluminescentes (LEDs), une suite de LEDs, une matrice de LEDs ou toute combinaison de celles-ci.
